# EUROPÄISCHE PATENTSCHRIFT

(11) **EP 4 150 414 B1**
(45) Veröffentlichungstag und Bekanntmachung des Hinweises auf die Patenterteilung: **13.08.2025**
(21) Anmeldenummer: 21726368.0
(22) Anmeldetag: 11.05.2021
(51) Int. Cl.: G05B 19/05

(54) **REIHENEINBAUGERÄT, AUTOMATISIERUNGSSYSTEM UND VERFAHREN ZUR PROZESSAUTOMATION**
IN-LINE UNIT, AUTOMATION SYSTEM AND METHOD FOR PROCESS AUTOMATION
DISPOSITIF EN LIGNE, SYSTEME D'AUTOMATISATION ET PROCEDE D'AUTOMATISATION DE PROCESSUS

(30) Priorität: 13.05.2020 DE 102020112955
(43) Veröffentlichungstag der Anmeldung: 22.03.2023
(73) Patentinhaber: Wago Verwaltungsgesellschaft mbH, 32423 Minden (DE)
(72) Erfinder: HELLMEIER, Marius, 32657 Lemgo (DE); ENNS, Patrick, 32423 Minden (DE); WERNER, Falk, 32423 Minden (DE)
(74) Vertreter: Kröncke, Rolf
(86) Internationale Anmeldenummer: PCT/EP2021/062394
(87) Internationale Veröffentlichungsnummer: WO 2021/228798

(56) Entgegenhaltungen:
- DE-A1- 102011 076 708
- DE-A1- 102018 108 309
- BICKER: "Benutzerhandbuch DC2412-UPSD DC2412-UPS-LDD UPSIC-1205D UPSIC-2403D", 6 March 2019 (2019-03-06), XP055821830, Retrieved from the Internet <URL:https://asset.conrad.com/media10/add/160267/c1/-/gl/001986076ML01/manual-1986076-bicker-elektronik-upsic-2403d-rail-mount-ups-din.pdf> [retrieved on 20210707]

## Beschreibung

Die Erfindung betrifft ein Reiheneinbaugerät für Automatisierungssysteme gemäß dem Oberbegriff des Patentanspruchs 1, ein Automatisierungssystem sowie ein Verfahren zur Prozessautomation.

Mithilfe von Automatisierungssystemen und der Programmlogik der Automatisierungssysteme wird es möglich, die durch eine Anlage durchzuführenden Prozesse weitestgehend zu automatisieren, um so die Steuerung und Regelung der Anlage und somit des Prozesses autark durchführen zu können. Darüber hinaus kann mit Hilfe eines Automatisierungssystems auch eine Dokumentation des Prozesses durchgeführt werden, wodurch sämtliche Prozessschritte transparent und im Nachgang reproduzierbar werden.

Automatisierungssysteme weisen hierfür in der Regel eine Kopfstation auf, die mittels einer Schnittstelle einen Lokalbus bereitstellt, an den über entsprechende Schnittstellen ein oder mehrere Reiheneinbaugeräte angeschlossen sind. Die Reiheneinbaugeräte wiederum können bedarfsweise mit Sensoren und/oder Aktoren verbunden sein und dienen zum Erfassen von Prozesszuständen und Steuern des entsprechenden automatisierenden Prozesses. Die Kopfstation weist hierfür in der Regel eine elektronische Steuerungseinheit auf, die zum Ausführen von Steuerungsaufgaben des Automatisierungssystems ausgebildet ist und dabei über den Lokalbus auf die entsprechend angeschlossenen Sensoren und über Aktoren der Reiheneinbaugeräte zugreifen kann.

Zum Zwecke der Spannungsversorgung wird die Kopfstation in der Regel mit einer elektrischen Energiequelle verbunden, welche die Kopfstation mit einer elektrischen Spannung versorgt. Für die Energieversorgung nachfolgender Busklemmen sind beispielsweise Potentialeinspeiseklemmen bekannt, um nachfolgenden Busklemmen eine Spannungsversorgung für die Feldebene zuzuführen.

Bei einem temporären Spannungsabfall oder gar Spannungsausfall würde bei einem direkten Anschließen der Kopfstation an eine Spannungsquelle jedoch nicht mehr genügend Zeit verbleiben, um auf den Ausfall der Versorgungsspannung zu reagieren und entsprechende Mechanismen und Reaktionen auszuführen, so dass das gesamte Automatisierungssystem in einen sicheren Betriebszustand versetzt werden kann. So müssen beispielsweise bei einem temporären Spannungsabfall nicht gespeicherte Daten gesichert, Meldungen über den Ausfall versendet und/oder andere benutzerdefinierte Reaktionen durchgeführt werden.

Selbiges gilt auch bei der Verwendung von Potentialeinspeiseklemmen und den nachgelagerten Busteilnehmern, die durch die Potentialeinspeiseklemme lediglich mit einer elektrischen Versorgungsspannung versorgt werden und bei einem temporären Spannungsabfall nicht weiter mit elektrischer Spannung versorgt werden können.

Aus der DE 10 2011 076 708 A1 ist eine Funkeinheit mit einer Versorgungsschaltung zur Spannungsversorgung und Verfahren zum Betreiben einer solchen Funkeinheit bekannt. Aus der DE 10 2018 108 309 A1 ist ein Automatisierungssystem einer Reihenklemme für ein Automatisierungssystem sowie ein Verfahren hierzu bekannt. Aus der Veröffentlichg von Bicker: "Benutzerhandbuch DC2412-UPSD DC2412-UPS-LDD UPSIC-1205D UPSIC-2403D", 6. März 2019 ist eine unterbrechungsfreie Stromversorgung für Niederspannungsgeräte bekannt.

Es ist daher Aufgabe der vorliegenden Erfindung ein verbessertes Automatisierungssystem sowie ein Reiheneinbaugerät anzugeben, indem es möglich wird, einen temporären Spannungsabfall derart zu überbrücken, dass zumindest die Kopfstation entsprechend auf den Spannungsabfall anwendungsspezifisch reagieren kann.

Die Aufgabe wird mit dem Reiheneinbaugerät gemäß Anspruch 1, dem Automatisierungssystem gemäß Anspruch 5 sowie dem Verfahren gemäß Anspruch 9 erfindungsgemäß gelöst. Vorteilhafte Ausgestaltungen finden sich in den entsprechenden Unteransprüchen.

Gemäß Anspruch 1 wird ein Reiheneinbaugerät für Automatisierungssysteme vorgeschlagen, das gattungsgemäß wenigstens eine Lokalbusschnittstelle zum Verbinden des Reiheneinbaugerätes mit einem Lokalbus eines Automatisierungssystems aufweist. Das Reiheneinbaugerät weist des Weiteren eine Spannungsversorgungseinheit auf, die mindestens einen Eingang zum Verbinden des Reiheneinbaugerätes mit einer Spannungsquelle einerseits und mindestens einen Ausgang andererseits aufweist, über den die Spannungsversorgungseinheit mit mindestens einer elektronischen Steuerungseinheit des Automatisierungssystems zur Einspeisung einer Versorgungsspannung verbunden oder verbindbar ist. Mit einem derartigen gattungsgemäßen Reiheneinbaugerät lässt sich somit an dem Ausgang der Spannungsversorgungseinheit des Reiheneinbaugeräts ein Verbraucher anschließen, beispielsweise eine Kopfstation, um diese mithilfe des Reiheneinbaugeräts mit einer elektrischen Spannung zu versorgen.

Die Spannungsversorgungseinheit des Reiheneinbaugeräts kann dabei so ausgebildet sein, dass an dem Ausgang die entsprechend gewünschte elektrische Spannung für den betreffenden Verbraucher anliegt und kann darüber hinaus die Eigenschaften einer Potentialeinspeiseklemme bezüglich des Bereitstellens einer Versorgungsspannung am Ausgang aufweisen.

Erfindungsgemäß ist nun vorgesehen, dass die Spannungsversorgungseinheit des Reiheneinbaugerätes für Automatisierungssysteme einen Energiespeicher zum Speichern von elektrischer Energie umfasst, wobei die Spannungsversorgungseinheit des Weiteren derart eingerichtet ist, einen Spannungsabfall und/oder einen Spannungsausfall am Eingang der Spannungsversorgungseinheit zu detektieren und mittels der im Energiespeicher gespeicherten elektrischen Energie eine Versorgungsspannung am Ausgang der Spannungsversorgungseinheit über einen begrenzten Zeitraum bereitzustellen.

Hierdurch wird es möglich, dass bei einem detektierten Spannungsabfall oder Spannungsausfall am Eingang der Spannungsversorgungseinheit zumindest am Ausgang der Spannungsversorgungseinheit weiterhin für einen begrenzten Zeitraum eine Versorgungsspannung bereitgestellt wird, so dass an den Ausgang der Spannungsversorgungseinheit angeschlossene Verbraucher, wie beispielsweise eine Kopfstation, auch weiterhin mit elektrischer Energie versorgt werden, und somit der temporäre Spannungsabfall oder Spannungsausfall entsprechend überbrückbar ist.

Erfindungsgemäß ist es des Weiteren vorgesehen, dass das Reiheneinbaugerät einen Signalausgang zum Signalisieren des am Eingang der Spannungsversorgungseinheit detektierten Spannungsabfalls oder Spannungsausfalls hat, so dass ein Verbraucher, der an den Signalausgang angeschlossen ist, den temporären Spannungsabfall oder Spannungsausfall signalisiert bekommt und entsprechende Maßnahmen einleiten kann.

Mithilfe eines derartigen spannungsgepufferten Reiheneinbaugerätes für Automatisierungssysteme wird es möglich, nicht nur einen Spannungsabfall oder Spannungsausfall temporär zu überbrücken, sondern einen solchen temporären Spannungsabfall oder Spannungsausfall auch an die entsprechenden Verbraucher zu signalisieren, so dass diese während der temporären Überbrückung durch das erfindungsgemäße Reiheneinbaugerät entsprechende anwendungsspezifische Maßnahmen einleiten können, um am Ende der Überbrückungszeit, wenn die Spannungsversorgung nicht wieder hergestellt wurde, sicher ausgeschaltet werden können. Mit einem derartigen spannungsgepufferten Reiheneinbaugerät kann somit verhindert werden, dass nicht gespeicherte Daten beispielsweise auf der Kopfstation verloren gehen oder dass das Automatisierungssystem in einem nicht-sicheren Zustand oder in einen unbestimmten Zustand gerät.

Bei dem Signalausgang zum Signalisieren des detektierten Spannungsabfalls oder Spannungsausfalls kann es sich um einen eigenständigen, von anderen Anschlüssen und Schnittstellen physisch, mechanisch bzw. baulich getrennten Signalausgang handeln, an den ein entsprechender Signalisierungsleiter angeschlossen wird. Dieser Signalisierungsleiter wird dann mit dem entsprechenden Gerät, bspw. einer Kopfstation, verbunden.

Alternativ oder zusätzlich kann auch vorgesehen sein, dass der Signalausgang Teil der Lokalbusschnittstelle ist, so dass basierend auf einem entsprechenden Signalisierungsprotokoll der detektierte Spannungsabfall oder Spannungsausfall über den Lokalbus an die daran angeschlossenen Geräte, bspw. der Kopfstation, übertragen werden. Dabei kann auf einen physisch, mechanisch bzw. baulich getrennten Signalausgang an dem spannungsgepufferten Reiheneinbaugerät verzichtet werden, da die Signalisierung des detektierten Spannungsabfalls oder Spannungsausfalls über die bereits vorhandene Lokalbusschnittstelle erfolgt. Hierfür kann ein entsprechendes Kommunikationsprotokoll zur Signalisierung auf dem Lokalbus angewendet werden. In diesem Falle ist der Signalausgang des spannungsgepufferten Reiheneinbaugerätes Bestandteil der Lokalbusschnittstelle und wird durch diese gebildet, wobei die Signalisierung über die Lokalbusschnittstelle und den daran angeschlossenen Lokalbus erfolgt.

Gemäß der Erfindung ist das Reiheneinbaugerät eine von einer Kopfstation eines Automatisierungssystems verschiedene Reihenklemme.

Denkbar ist selbstverständlich auch, dass das spannungsgepufferte Reiheneinbaugerät eine von einer Kopfstation verschiedene Reihenklemme ist und beispielsweise über die Lokalbusschnittstelle mit dem Lokalbus des Automatisierungssystems bereitgestellt durch die Kopfstation verbunden oder verbindbar ist.

In einer Ausführungsform kann das Reiheneinbaugerät eine Abschalteinrichtung aufweisen, die eingerichtet ist, die Spannungsversorgung eines oder mehrerer an dem Lokalbus angeschlossenen Lokalbusteilnehmer zu unterbrechen, wenn die Spannungsversorgungseinheit des Reiheneinbaugerätes einen Spannungsabfall oder einen Spannungsausfall am Eingang der Spannungsversorgungseinheit detektiert hat.

Da in der Regel über den Lokalbus auch die Spannungsversorgung anderer an den Lokalbus angeschlossener Lokalbusteilnehmer erfolgt, können durch die Unterbrechung des Lokalbusses ab dem erfindungsgemäß Reiheneinbaugerät andere nachfolgende Busteilnehmer abgeschaltet werden, um so beispielsweise der angeschlossenen Kopfstation genügend elektrische Energie zur Überbrückung des Spannungsabfalls oder -ausfalls zur Verfügung zu stellen, so dass die geeigneten Maßnahmen auch entsprechend ausgeführt werden können. Bei einem detektierten Spannungsabfall oder -ausfall werden somit nicht mehr sämtliche Lokalbusteilnehmer des Automatisierungssystems durch die Kopfstation mit elektrischer Energie versorgt, sondern nur noch jene Busteilnehmer, die vor dem Reiheneinbaugerät angeordnet sind. Somit kann durch die Anordnung des erfindungsgemäßen Reiheneinbaugerätes innerhalb des Automatisierungssystems die Auswahl derjenigen Lokalbusteilnehmer festgelegt werden, die im Falle eines Spannungsabfalls oder -ausfalls noch mit elektrischer Energie versorgt werden und welche nicht.

Hierbei kann vorgesehen sein, dass die Abschalteinrichtung zum Terminieren des Lokalbusses bei einem detektierten Spannungsabfall oder Spannungsausfall derart ausgebildet ist, dass die Kommunikation von Prozessdaten über den Lokalbus weiterhin möglich ist. Eine Kommunikation über den Lokalbus ist bei einer Terminierung durch das erfindungsgemäße Reiheneinbaugerät dann schließlich bis zu diesem möglich.

Hierdurch werden die Kopfstation und eine Auswahl von entsprechenden Lokalbusteilnehmern bei einem Spannungsabfall oder Spannungsausfall noch in die Lage versetzt, geeignete Maßnahmen zu ergreifen und ggf. Daten über den Lokalbus auszutauschen. So können beispielsweise noch nicht gespeicherte Daten noch aktiver Lokalbusteilnehmer in die Kopfstation übertragen werden, damit diese die dann empfangenen Daten entsprechend auswertet und/oder speichert.

Das Automatisierungssystem hat eine Kopfstation, wobei die Kopfstation eine elektronische Steuerungseinheit hat, die zum Ausführen von Steuerungsaufgaben des Automatisierungssystems ausgebildet ist. Die Kopfstation weist des Weiteren mindestens eine Lokalbusschnittstelle auf, um die Kopfstation mit einem Lokalbus eines Automatisierungssystems zu verbinden bzw. mittels der Lokalbusschnittstelle an der Kopfstation einen solchen Lokalbus bereitzustellen. Dabei kann die Kopfstation derart eingerichtet sein, dass über die Lokalbusschnittstelle der Lokalbus für andere Busteilnehmer bereitgestellt wird, so dass die Kopfstation das Senden und Empfangen auf dem Lokalbus entsprechend steuert. Des Weiteren weist die Kopfstation eine Spannungsversorgungseinheit auf, die mindestens einen Eingang zum Verbinden der Kopfstation mit einer Spannungsquelle hat.

Die Kopfstation hat einen Signaleingang, mit dem der Kopfstation ein detektierter Spannungsabfall oder Spannungsausfall der Versorgungsspannung signalisierbar ist, wobei die elektronische Steuerungseinheit der Kopfstation über einen über den Signaleingang signalisierten Spannungsabfall oder Spannungsausfall eingerichtet ist, ein Notprogramm auszuführen, um die Kopfstation und/oder das Automatisierungssystem in einen sicheren Zustand zu überführen.

Mithilfe der Kopfstation wird es somit möglich, einen Spannungsabfall oder Spannungsausfall anhand einer gesonderten Signalisierung zu erkennen, die unabhängig von einer möglichen Detektion eines Spannungsabfalls oder Spannungsausfalls an der Spannungsversorgungseinheit ist und vorzugsweise hierzu getrennt vorgesehen ist, so dass basierend auf der Signalisierung eines Spannungsabfalls oder Spannungsausfalls dann die Kopfstation ein Notprogramm ausführen kann, um in einen sicheren Betriebszustand zu wechseln. Insbesondere ist dies dann vorteilhaft, wenn die Kopfstation mit dem zuvor beschriebenen Reiheneinbaugerät zusammenarbeitet, so dass der Kopfstation über den Signaleingang ein Spannungsabfall oder Spannungsausfall signalisiert werden kann, während das Reiheneinbaugerät über einen begrenzten Zeitraum den Spannungsabfall oder Spannungsausfall überbrückt und die Kopfstation weiterhin mit elektrischer Energie versorgt, während das Notprogramm auf der elektronischen Steuerungseinheit der Kopfstation ausgeführt wird.

Dabei kann vorgesehen sein, dass der Signaleingang zur Signalisierung eines Spannungsabfalls oder Spannungsausfalls ein eigenständiger, von anderen Anschlüssen und Schnittstellen physisch, mechanisch bzw. baulich getrennter Signaleingang ist, an den ein entsprechender Signalisierungsleiter angeschlossen wird.

Alternativ oder zusätzlich kann auch vorgesehen sein, dass der Signaleingang Teil der Lokalbusschnittstelle der Kopfstation ist, so dass basierend auf einem entsprechenden Signalisierungsprotokoll der detektierte Spannungsabfall oder Spannungsausfall über den Lokalbus an die Kopfstation signalisiert wird. Dabei kann auf einen physisch, mechanisch bzw. baulich getrennten Signaleingang an der Kopfstation verzichtet werden, da die Signalisierung des detektierten Spannungsabfalls oder Spannungsausfalls über die bereits vorhandene Lokalbusschnittstelle und den gebildeten Lokalbus erfolgt. Hierfür kann ein entsprechendes Kommunikationsprotokoll zur Signalisierung auf dem Lokalbus angewendet werden. In diesem Falle ist der Signaleingang der Kopfstation Bestandteil der Lokalbusschnittstelle und wird durch diese gebildet, wobei die Signalisierung über die Lokalbusschnittstelle und den daran angeschlossenen Lokalbus erfolgt.

Gemäß einer Ausführungsform kann die Kopfstation eingerichtet sein, nach der Signalisierung eines Spannungsabfalls oder Spannungsausfalls zumindest teilweise Daten von an dem Lokalbus angeschlossenen Lokalbusteilnehmern zu erhalten und diese erhaltenen Daten dann in einem persistenten Speicher zu hinterlegen, so dass ggf. nach Ausfall der Spannungsversorgung nach dem begrenzten Zeitraum der Überbrückung die Daten sicher hinterlegt sind.

In einer weiteren Ausführungsform kann die Kopfstation eine Abschalteinrichtung aufweisen, die eingerichtet ist, die Spannungsversorgung eines oder mehrerer an dem Lokalbus angeschlossenen Lokalbusteilnehmer zu unterbrechen, wenn der Kopfstation über den Signaleingang ein detektierter Spannungsabfall oder Spannungsausfall der Versorgungsspannung signalisiert wird. Hierdurch wird es möglich, der den Lokalbus angeschlossenen Busteilnehmer von der Versorgungsspannung durch die Kopfstation abzutrennen, so dass genügend Kapazität bei der Überbrückung des Spannungsabfalls oder Spannungsausfalls zum Ausführen des Notprogramms auf der Kopfstation verbleibt und keine elektrischen Ressourcen für andere, nicht mehr notwendige Busteilnehmer verschwendet werden.

Die Aufgabe wird im Übrigen auch mit dem Automatisierungssystem zur Prozessautomatisierung gemäß Anspruch 5 erfindungsgemäß gelöst, wobei das Automatisierungssystem mindestens eine Kopfstation wie vorstehend beschrieben und mindestens ein spannungsgepuffertes Reiheneinbaugerät wie vorstehend beschrieben hat. Kopfstation und spannungsgepuffertes Reiheneinbaugerät sind dabei über einen Lokalbus miteinander verbunden. Das Automatisierungssystem kann darüber hinaus noch weitere Reihenklemmen aufweisen, die ausgehend von der Kopfstation vor oder hinter dem spannungsgepufferten Reiheneinbaugerät angeordnet sind.

Der Ausgang der Spannungsversorgungseinheit des spannungsgepufferten Reiheneinbaugerätes ist dabei mit dem Eingang der Spannungsversorgungseinheit der Kopfstation verbunden, so dass das spannungsgepufferte Reiheneinbaugerät der Kopfstation eine elektrische Spannung bereitstellt. Das spannungsgepufferte Reiheneinbaugerät ist dabei wiederum über einen Eingang der Spannungsversorgungseinheit mit einer elektrischen Energiequelle (beispielsweise Spannungsquelle) verbunden und wird im Normalbetrieb über diesen Eingang mit elektrischer Energie versorgt. Auf Basis dieser elektrischen Energieversorgung des spannungsgepufferten Reiheneinbaugerätes wird dann die Kopfstation entsprechend mit elektrischer Energie versorgt, so dass im Normalbetrieb das spannungsgepufferte Reiheneinbaugerät für die Kopfstation eine Art Spannungsquelle darstellt. Des Weiteren ist der Signalausgang zum Signalisieren eines am Eingang der Spannungsversorgungseinheit der spannungsgepufferten Reihenklemme detektierten Spannungsabfalls oder Spannungsausfalls mit dem Signaleingang zum Signalisieren eines Spannungsabfalls oder Spannungsausfalls der Kopfstation verbunden, so dass der Kopfstation durch das spannungsgepufferte Reiheneinbaugerät ein Spannungsabfall oder Spannungsausfall signalisiert werden kann.

Der Signalausgang und der Signaleingang können eigenständige, mechanisch von anderen Anschlüssen und Schnittstellen getrennte Anschlüsse oder Schnittstellen sein, die mit einem entsprechenden Signalisierungsleiter verbunden werden. Alternativ oder zusätzlich kann auch vorgesehen sein, dass der Signalausgang und der Signaleingang Bestandteil der Lokalbusschnittstelle des jeweiligen Gerätes (Kopfstation und Reiheneinbaugerät) ist und durch diese Lokalbusschnittstelle gebildet wird. In diesem Falle erfolgt die Signalisierung des Spannungsabfalls bzw. Spannungsausfalls über den Lokalbus und die jeweilige Lokalbusschnittstelle.

Bei einem detektieren Spannungsabfall oder Spannungsausfall übernimmt das spannungsgepufferte Reiheneinbaugerät für einen begrenzten Zeitraum die Energieversorgung der Kopfstation und signalisiert der Kopfstation über den Signaleingang der Kopfstation den detektierten Spannungsabfall oder Spannungsausfall, so dass die Kopfstation beispielsweise ein Notprogramm ausführen kann, um die Kopfstation und/oder das Automatisierungssystem in einen sicheren Zustand zu überführen.

Gemäß einer Ausführungsform werden mittels einer Abschalteinrichtung das spannungsgepufferten Reiheneinbaugerätes ein oder mehrere an dem Lokalbus angeschlossene Busteilnehmer von dem Lokalbus getrennt und nicht mehr mit elektrischer Energie versorgt, wenn die Spannungsversorgungseinheit des spannungsgepufferten Reiheneinbaugerätes einen Spannungsabfall oder Spannungsausfall am Eingang der Spannungsversorgungeinheit detektiert.

Dabei werden insbesondere alle nachgelagerten Lokalbusteilnehmer des Lokalbusses von diesem getrennt, wobei das spannungsgepufferte Reiheneinbaugerät insbesondere derart eingerichtet ist, den Lokalbus zu terminieren, um so eine Kommunikation über den Lokalbus zwischen Kopfstation und dem spannungsgepufferten Reiheneinbaugerät weiter aufrechtzuerhalten.

Die Aufgabe wird im Übrigen auch mit dem Verfahren gemäß Anspruch 9 erfindungsgemäß gelöst. Gemäß Anspruch 9 wird ein Verfahren zur Prozessautomation mittels eines Automatisierungssystems vorgeschlagen, wobei mithilfe des Automatisierungssystems Teile eines Prozesses automatisiert werden sollen. Das Automatisierungssystem weist, wie vorstehen bereits geschildert, eine Kopfstation, ein spannungsgepuffertes Reiheneinbaugerät gemäß der vorliegenden Erfindung sowie ein oder mehrere Reiheneinbaugeräte auf, die mittels eines gemeinsamen Lokalbusses miteinander verbunden sind. Das Verfahren umfasst dabei die folgenden Schritte:
- Detektieren eines Spannungsabfalls oder Spannungsausfalls an einem Eingang einer Spannungsversorgungseinheit des spannungsgepufferten Reiheneinbaugerätes, mit dem das Reiheneinbaugerät mit einer Spannungsquelle verbunden ist;
- Bereitstellen einer elektrischen Versorgungsspannung an einem Ausgang der Spannungsversorgungseinheit des spannungsgepufferten Reiheneinbaugerätes aus einem elektrischen Energiespeicher des spannungsgepufferten Reiheneinbaugerätes, wobei der Ausgang der Spannungsversorgungseinheit des spannungsgepufferten Reiheneinbaugerätes mit einem Eingang einer Spannungsversorgungseinheit der Kopfstation verbunden ist;
- Signalisieren des detektierten Spannungsabfalls oder Spannungsausfalls an einem Signalausgang des spannungsgepufferten Reiheneinbaugerätes, wobei der Signalausgang des spannungsgepufferten Reiheneinbaugerätes mit einem Signaleingang der Kopfstation verbunden ist; und
- Ausführen eines Notprogramms durch eine elektronische Steuerungseinheit der Kopfstation, wenn ein detektierter Spannungsabfall oder Spannungsausfall am Signaleingang der Kopfstation durch das spannungsgepufferte Reiheneinbaugerät signalisiert wurde, während die Kopfstation über den Eingang der Spannungsversorgungseinheit der Kopfstation mit der bereitgestellten elektrischen Versorgungsspannung des spannungsgepufferten Reiheneinbaugerätes gespeist wird.

Vorteilhafte Ausgestaltungen des erfindungsgemäßen Verfahrens finden sich in den entsprechenden Unteransprüchen.

Es ist dabei vom Gedanken der vorliegenden Erfindung grundsätzlich umfasst, dass das spannungsgepufferte Reiheneinbaugerät in mindestens zwei verschiedenen Betriebsmodi betrieben werden kann:
a) normaler Versorgungsmodus und
b) Überbrückungsmodus.

Im normalen Versorgungsmodus hat das spannungsgepufferte Reiheneinbaugerät die Aufgabe einer Potentialeinspeiseklemme dergestalt, dass die aus der elektrischen Spannungsquelle eingespeiste elektrische Spannung zur Bereitstellung einer elektrischen Versorgungsspannung am Ausgang des spannungsgepufferten Reiheneinbaugerätes benutzt wird. Bei einem Spannungsabfall bzw. Spannungsausfall wechselt das spannungsgepufferte Reiheneinbaugerät vom normalen Versorgungsmodus in den Überbrückungsmodus, wobei dann für einen begrenzten Überbrückungszeitraum für die Bereitstellung der elektrischen Versorgungsspannung am Ausgang des spannungsgepufferten Reiheneinbaugerätes die im elektrischen Energiespeicher gespeicherte elektrische Energie genutzt wird.

Dabei ist es selbstverständlich denkbar, dass das spannungsgepufferte Reiheneinbaugerät so eingerichtet ist, dass es eine Normalisierung der externen Spannungsversorgung durch die externe Spannungsquelle feststellt und somit den Wegfall des Spannungsabfalls bzw. Spannungsausfalls erkennt. In diesem Fall kann das spannungsgepufferte Reiheneinbaugerät von dem Überbrückungsmodus (Notbetrieb) wieder zurück in den normalen Versorgungsmodus wechseln, wobei dies selbstverständlich durch den Signalausgang signalisiert werden kann.

Unter dem Signalisieren eines detektierten Spannungsabfalls bzw. Spannungsausfalls am Signalausgang des spannungsgepufferten Reiheneinbaugerätes wird insbesondere verstanden, dass das spannungsgepufferte Reiheneinbaugerät ein elektrisches Signal generiert, welches an den Signalausgang des spannungsgepufferten Reiheneinbaugerätes angelegt bzw. ausgegeben wird. Das elektrische Signal kann dabei beispielsweise ein digitales elektrisches Signal sein, welches entsprechend einem vorgegebenen Kommunikationsprotokoll entsprechenden Informationen über den detektierten Spannungsausfall bzw. Spannungsabfall enthält. Über ein derartiges Signal lässt sich darüber hinaus auch signalisieren, dass die Spannungsversorgung durch die externe Spannungsquelle nunmehr wieder fehlerfrei läuft, wodurch die Kopfstation entsprechend geeignete Maßnahmen ergreifen kann. Denkbar ist auch, dass sowohl die Kopfstation als auch das spannungsgepufferte Reiheneinbaugerät so ausgebildet sind, dass bei einer Normalisierung der externen Spannungsversorgung durch die externe Spannungsquelle am Signalausgang der spannungsgepufferten Reihenklemme ein Signal ausgegeben wird, welches an der Kopfstation dazu führt, dass die Kopfstation von ihrem ausgeschalteten Betriebszustand in den eingeschalteten Betriebszustand wechselt, so dass das gesamte Automatisierungssystem automatisch beim Wiederherstellen der Spannungsversorgung eingeschaltet werden kann. Die Signalisierung kann dabei auch über den Lokalbus erfolgen, so dass der Signalausgang und der Signaleingang Bestandteil der jeweiligen Lokalbusschnittstelle des Gerätes ist.

Die Erfindung wird anhand der beigefügten Figuren beispielhaft erläutert. Es zeigen:
- Fig. 1: Darstellung eines spannungsgepufferten Reiheneinbaugerätes in einer Draufsicht;
- Fig. 2: schematische Darstellung des spannungsgepufferten Reiheneinbaugerätes;
- Fig. 3: Darstellung eines Automatisierungssystems mit einem spannungsgepufferten Reiheneinbaugerät in einem Verdrahtungsbeispiel.

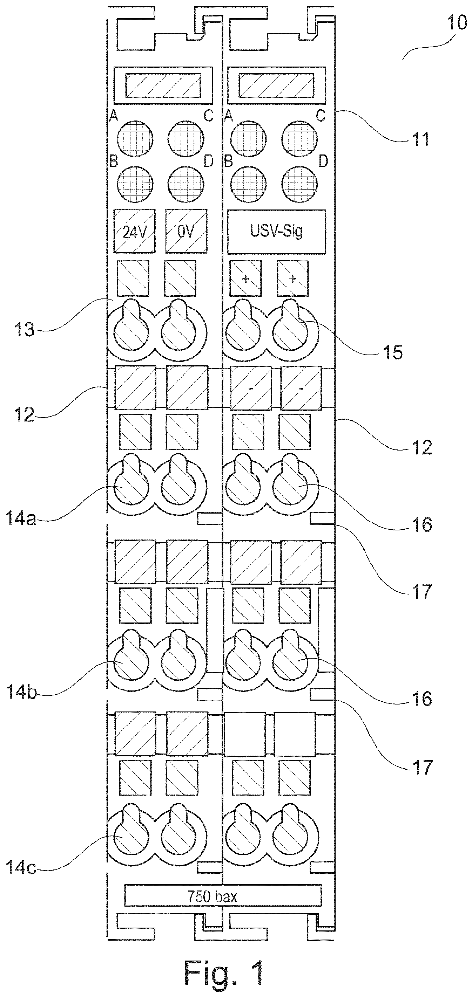

Figur 1 zeigt ein spannungsgepuffertes Reiheneinbaugerät 10 (auch spannungsgepufferte Einspeiseklemme genannt) in Form einer Reihenklemme, wobei das Reiheneinbaugerät 10 ein Gehäuse 11 aufweist, an dem eine Mehrzahl von Anschlüssen vorgesehen sind, wobei das Gehäuse 11 auf einer nicht dargestellten Rückseite einen Verbindungsmechanismus aufweist, um das Reiheneinbaugerät 10 beispielsweise auf einer Hutschiene befestigen zu können. An beiden Gehäuseseiten des Gehäuses 11, die sich von der sichtbaren Vorderseite in der Betrachtungsebene seitlich erstrecken, kann sich jeweils eine Lokalbusschnittstelle 12 befinden, um das Reiheneinbaugerät 10 mit einem Lokalbus eines Automatisierungssystems verbinden zu können. Insbesondere die an der rechten Gehäuseseite vorgesehene Lokalbusschnittstelle 12 kann dabei so ausgebildet sein, dass die daran über den Lokalbus angeschlossen Geräte abschaltbar sind, wie später noch dargelegt wird.

Das Reiheneinbaugerät 10 weist des Weiteren einen Eingang 13 einer im Inneren des Gehäuses 11 angeordneten und nicht sichtbaren Spannungsversorgungseinheit auf, der im Ausführungsbeispiel der Figur 1 in Form zweier Leitereinführöffnungen ausgebildet ist. Mithilfe dieser beiden Leitereinführöffnungen des Eingangs 13 kann das Reiheneinbaugerät mit einer externen Spannungsquelle verbunden werden, um so das Reiheneinbaugerät über die externe Spannungsquelle mit elektrischer Energie zu versorgen.

Des Weiteren sind mehrere Ausgänge 14a bis 14c der Spannungsversorgungseinheit des Reiheneinbaugerätes 10 vorgesehen, die jeweils in Form einer Leitereinführ-öffnung ausgebildet sein können. An diesen Ausgängen 14a bis 14c stellt das spannungsgepufferte Reiheneinbaugerät 10 eine elektrische Versorgungsspannung bereit, um so die an den Ausgängen 14a bis 14c angeschlossenen Verbraucher mit elektrischer Energie zu versorgen. Dabei kann der Ausgang 14a beispielsweise ungepuffert sein, d.h. bei einem Spannungsabfall und Spannungsausfall würde an diesem Ausgang 14a keine elektrische Versorgungsspannung für einen Notbetrieb bereitgestellt werden. Bei den Ausgängen 14b und 14c kann es sich darüber hinaus um gepufferte Ausgänge handeln, die auch bei einem Spannungsausfall oder Spannungsabfall für einen begrenzten Zeitraum noch eine elektrische Spannung bereitstellen.

Wird nun am Eingang 13 der Spannungsversorgungseinheit durch das Reiheneinbaugerät 10 ein Spannungsabfall oder Spannungsausfall detektiert, so wechselt das Reiheneinbaugerät 10 von einem normalen Versorgungsmodus in einen Überbrückungsmodus, bei dem die elektrische Versorgungsspannung, die an den Ausgängen 14b und 14c für einen begrenzten Zeitraum bereitgestellt wird, aus einem elektrischen Energiespeicher des Reiheneinbaugeräts 10 gespeist wird. Der elektrische Energiespeicher kann dabei innerhalb des Gehäuses 11 des Reiheneinbaugerätes angeordnet sein oder mit einem solchen entsprechend verbunden sein. Der begrenzte Zeitraum, innerhalb dessen im Überbrückungsmodus an den Ausgängen 14b und 14c die elektrische Versorgungsspannung noch bereitgestellt werden kann, richtet sich dabei nach der Kapazität des Energiespeichers und der im Überbrückungsmodus zu versorgenden Verbraucher.

Des Weiteren weist das Reiheneinbaugerät 10 einen Signalausgang 15 auf, an dem ein elektrisches Signal ausgegeben wird, um einen Spannungsabfall oder Spannungsausfall entsprechend zu signalisieren und so einen angeschlossenen Verbraucher darüber zu informieren, dass nunmehr die Ausgänge 14b und 14c aus dem elektrischen Energiespeicher gespeist werden und das Reiheneinbaugerät somit im Überbrückungsmodus arbeitet. Im einfachsten Fall ist hierbei denkbar, dass es sich bei dem Signalausgang um einen NO-Ausgang (Normal Open Ausgang) handelt, der im normalen Versorgungsmodus mittels eines Relais geschlossen ist, wobei das Schließen des Relais zwingend das Vorhandensein einer externen Spannungsquelle voraussetzt. Hierdurch liegt am Signalausgang 15 im normalen Versorgungsmodus permanent eine Steuerspannung an, die signalisiert, dass alles in Ordnung ist.

Wechselt das Reiheneinbaugerät 10 von dem normalen Versorgungsmodus in den Überbrückungsmodus, so fehlt es dem Relais an einer notwendigen Versorgungsspannung, so dass der Signalausgang 15 in den geöffneten Zustand wechselt. Am Signalausgang 15 liegt somit keine Steuerspannung mehr an, was von dem entsprechenden Verbraucher dahingehend interpretiert werden kann, dass die spannungsgepufferte Einspeiseklemme 10 in den Überbrückungsmodus gewechselt hat.

Denkbar ist aber auch, dass über den Signalausgang 15 digitale Signale durch Zugrundelegung eines entsprechenden Protokolls übertragen werden, wodurch noch mehrere Informationen bezüglich des Spannungsabfalls oder Spannungsausfalls an den gewünschten Verbraucher übermittelt werden können.

Denkbar ist alternativ oder zusätzlich aber auch, dass die Signalisierung über die Lokalbusschnittstelle 12 auf dem Lokalbus erfolgt, so dass ein an dem Lokalbus angeschlossenes Gerät, bspw. eine Kopfstation, über den Lokalbus den Spannungsabfall bzw. Spannungsausfall signalisiert bekommt. Dies ist dann besonders vorteilhaft, wenn bspw. die Kopfstation über keinen entsprechenden zusätzlichen Signaleingang zur Signalisierung des Spannungsabfalls oder Spannungsausfalls verfügt.

Des Weiteren kann das Reiheneinbaugerät noch Feldversorgungsanschlüsse 16 aufweisen, um beispielsweise Feldgeräte wie Sensoren oder Aktoren anschließen zu können. Die Feldversorgungsanschlüsse können als Eingänge oder Ausgänge konfiguriert bzw. genutzt werden. Das Potential wird in der Regel über die nebenliegenden Messerkontakte 17 an die nachfolgenden Klemmen (die rechts neben dem Reiheneinbaugerät 10 angeordnet werden) weitergegeben. Dabei kann einer der Leiterkontakte, bspw. jeweils der zweite Leiterkontakt, auch als Ausgang genutzt werden.

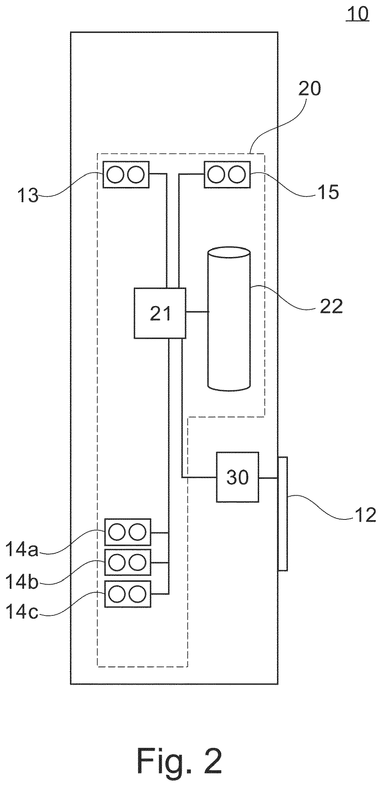

Figur 2 zeigt den schematischen Aufbau des Reiheneinbaugerätes 10. Die Spannungsversorgungseinheit 20, die sich im Ausführungsbeispiel innerhalb des Gehäuses des Reiheneinbaugerätes 10 befindet, weist die bereits aus der Figur 1 bekannten Bauelemente wie Eingang 13 zum Verbinden des Reiheneinbaugerätes 10 mit einer externen Energiequelle, Ausgänge 14 zum Versorgen von an das Reiheneinbaugerät 10 angeschlossenen Verbrauchern sowie einen Signalausgang 15 zum Signalisieren eines Spannungsabfalls oder Spannungsausfalls auf. Die Spannungsversorgungseinheit 20 weist des Weiteren ein Steuerungsmodul 21 auf, das zum Detektieren eines Spannungsabfalls oder Spannungsausfalls am Eingang 13 der Spannungsversorgungseinheit 20 ausgebildet ist und darüber hinaus so eingerichtet ist, das Reiheneinbaugerät 10 von dem normalen Versorgungsmodus in den Überbrückungsmodus und zurück zu schalten. Im normalen Versorgungsmodus wird durch das Steuerungsmodul 21 die Versorgung der Ausgänge 14a, 14b und 14c durch die an dem Eingang 13 der Spannungsversorgungseinheit 20 angeschlossene externe Energiequelle (nicht dargestellt) realisiert. Im Überbrückungsmodus wird hingegen die Versorgung der gepufferten Ausgänge 14b) und 14c) aus der in dem elektrischen Energiespeicher 22 gespeicherten elektrischen Energie gespeist, wobei gleichzeitig durch das Steuerungsmodul 21 ein entsprechendes Signal am Signalausgang 15 bereitgestellt wird, um angeschlossenen Einheiten an diesen Signalausgang 15 im Wechsel vom normalen Versorgungsmodus in den Überbrückungsmodus zu signalisieren.

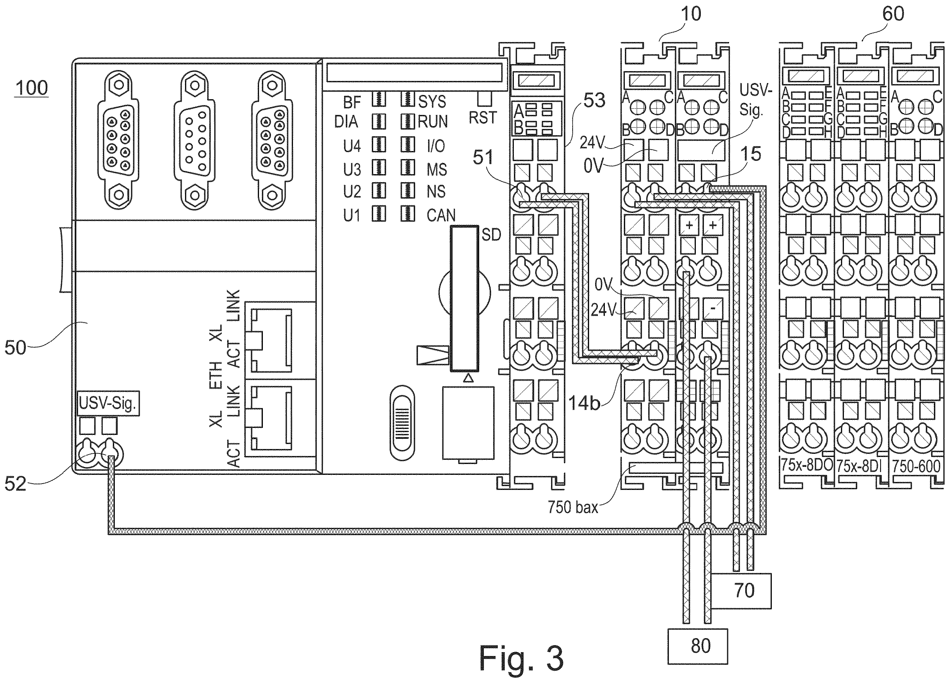

Das Steuerungsmodul 21 steht des Weiteren mit einer Abschalteinrichtung bzw. einem Abschaltmodul 30 signaltechnisch in Verbindung, wobei die Abschalteinrichtung bzw. das Abschaltmodul 30 mit der Steuerungslogik der Lokalbusschnittstelle 12 in Verbindung steht. Über die Lokalbusschnittstelle 12 können an die als reines Einbaugerät ausgebildete spannungsgepufferte Einspeiseklemme 10 weitere Reihenklemmen angeschlossen werden, so dass diese über diese Lokalbusschnittstelle 12 mit den durch die Kopfstation des Automatisierungssystems (vgl. Figur 3) bereitgestellten Lokalbus verbunden werden können.

Im Ausführungsbeispiel der Figur 2 ist die Abschalteinrichtung 30 so ausgebildet, dass sie die Lokalbusschnittstelle 12 an der rechten Gehäuseseite des Reiheneinbaugerätes 10 derart manipuliert, dass die rechts von dem Reiheneinbaugerät 10 mit dem Lokalbus verbundenen Reihenklemmen von dem Lokalbus getrennt werden. Dies hat den Vorteil, dass weitere Verbraucher, die über den Lokalbus mit elektrischer Energie versorgt werden, abgeschaltet werden, so dass die in dem Energiespeicher 22 gespeicherte elektrische Energie für das Notprogramm der Kopfstation und somit entsprechend für die wesentlichen Funktionen im Überbrückungsmodus genutzt werden kann. Gegebenenfalls können auch ausgewählte vorgeschaltete Lokalbusteilnehmer weiterhin mit der in dem Energiespeicher 22 gespeicherten elektrischen Energie versorgt werden, bspw. zur Ausführung eines Notprogramms.

Im Ausführungsbeispiel der Figur 2 wird dabei lediglich die rechte Lokalbusschnittstelle 12 manipuliert, so dass durch den Einbauort des Reiheneinbaugerätes 10 innerhalb des gesamten Automatisierungssystems festgelegt werden kann, welche an dem Lokalbus angeschlossenen Reihenklemmen letztendlich auch im Überbrückungsmodus noch weiterhin mit elektrischer Energie versorgt werden sollen und welche Reihenklemmen bei einem Spannungsabfall oder Spannungsausfall vom Netz genommen werden. Dabei ist es denkbar, dass die Abschaltvorrichtung ebenfalls mindestens einen der Feldversorgungsausgänge 16 und/oder der Messerkontakte 17 (Figur 1) von der elektrischen Spannungsversorgung trennt. Dabei ist es ebenfalls denkbar, dass zuvor einstellbar ist, welche Feldversorgungsausgänge bzw. Messerkontakte im Überbrückungsmodus von der Spannungsversorgung getrennt bzw. weiterhin mit einer elektrischen Spannung versorgt werden.

Es ist demzufolge vorteilhaft und vom Kerngedanken der vorliegenden Erfindung umfasst, wenn die Abschalteinrichtung derart ausgebildet ist, dass an eine erste Schnittstelle angeschlossene Reihenklemmen mit dem Lokalbus verbunden bleiben, während an einer zweiten Lokalbusschnittstelle angeschlossene Reihenklemmen bei der Detektion eines Spannungsabfalls oder Spannungsausfalls von dem Lokalbus getrennt werden.

Figur 3 zeigt ein Verdrahtungsbeispiel eines Automatisierungssystems 100, das eine Kopfstation 50, ein Reiheneinbaugerät 10 als spannungsgepufferte Einspeiseklemme sowie weitere Reihenklemmen 60 hat. Zum besseren Verständnis sind die wesentlichen Bestandteile Kopfstation 50, Reiheneinbaugerät 10 sowie weitere Reihenklemmen 60 voneinander abgegrenzt dargestellt, wobei im Betrieb diese einander angrenzen, damit jede Reihenklemme bzw. jedes Reiheneinbaugerät 10 und 60 mit dem durch die Kopfstation 50 bereitgestellten Lokalbus verbunden ist.

Das Reiheneinbaugerät 10 ist nun zunächst mit einer externen Energiequelle 70 verbunden, so dass hierüber dem Reiheneinbaugerät 10 eine entsprechende externe Spannungsversorgung bereitgestellt wird. An den Feldversorgungsanschlüsse 16 des Reiheneinbaugerätes 10 sind schematisch angedeutet in der Figur 3 entsprechende Feldgeräte 80 angeschlossen, wie beispielsweise Aktoren oder Sensoren.

An dem spannungsgepufferten Ausgang 14b des Reiheneinbaugerätes 10 ist nunmehr die Spannungsversorgung für die Kopfstation 50 angeschlossen, so dass der Ausgang 14b der spannungsgepufferten Einspeiseklemme 10 in den Eingang 51 der Kopfstation für die Spannungsversorgung der Kopfstation mündet. Über diesen spannungsgepufferten Ausgang 14b des Reiheneinbaugerätes 10 wird somit die Kopfstation 50 über deren Eingang 51 mit elektrischer Energie versorgt.

Des Weiteren weist die Kopfstation 50 einen Signaleingang 52 auf, der mit dem Signalausgang 15 dem Reiheneinbaugerät 10 verbunden ist. Außerdem weist die Kopfstation 50 eine Lokalbusschnittstelle 53 auf, mit der ein Lokalbus bereitgestellt werden kann bzw. die Kopfstation mit einem Lokalbus verbindbar ist.

Im normalen Versorgungsmodus wird die Kopfstation 50 über ihren Eingang 51 mit elektrischer Energie basierend auf der externen Energiequelle 70 versorgt. Wird durch das Reiheneinbaugerät 10 jedoch ein Spannungsabfall oder ein Spannungsausfall der externen Energiequelle 70 detektiert, so wechselt das Reiheneinbaugerät 10 vom normalen Versorgungsmodus in den Überbrückungsmodus, bei dem die Spannungsversorgung bereitgestellt am Ausgang 14b durch den Energiespeicher 22 (Figur 2) realisiert wird. Im Überbrückungsmodus wird darüber hinaus am Signalausgang 15 des Reiheneinbaugerätes 10 ein entsprechendes Signal bereitgestellt, das durch den Signaleingang 52 der Kopfstation 50 empfangen wird bzw. detektierbar ist, so dass die Kopfstation 50 den Wechsel vom normalen Versorgungsmodus in den Überbrückungsmodus des Reiheneinbaugerätes 10 signalisiert bekommt.

Die Signalisierung kann aber auch über den Lokalbus erfolgen. Das spannungsgepufferte Reiheneinbaugerät 10 sendet ein entsprechendes Signal über den Lokalbus mittels seiner Lokalbusschnittstelle 12 als Signalausgang. Die Kopfstation 50 empfängt das Signal vom Lokalbus mittels seiner Lokalbusschnittstelle 53 und führt die erforderlichen Maßnahmen durch.

Die Kopfstation 50 ist nun so ausgebildet, dass sie bei der Signalisierung eines Überbrückungsmodus ein entsprechendes Notprogramm ausführt, um noch nicht gespeicherte Daten persistent zu hinterlegen, ggf. von anderen angeschlossenen Geräten Daten abruft und möglicherweise auch das Betriebssystem herunterfährt, um das gesamte Automatisierungssystem 100 in einen sicheren Betriebszustand zu überführen.

Das Reiheneinbaugerät 10 ist des Weiteren so ausgebildet, dass die rechts von dem Reiheneinbaugerät 10 befindlichen weiteren Reihenklemmen vom Lokalbus abgetrennt werden, wodurch in der Regel auch die Spannungsversorgung der weiteren Reihenklemmen 60 über den Lokalbus unterbrochen wird. Darüber hinaus kann das Reiheneinbaugerät so ausgebildet sein, dass die zwischen der Kopfstation 50 und dem Reiheneinbaugerät 10 befindliche Reihenklemmen (in Figur 3 nicht dargestellt) nicht vom Lokalbus abgetrennt werden und weiterhin über den Lokalbus mit elektrischer Energie durch die Kopfstation 50 versorgt werden, so dass durch den Einbauort des Reiheneinbaugerätes 10 innerhalb des Automatisierungssystems 100 festgelegt werden kann, welche weiteren Lokalbusteilnehmer des Automatisierungssystems 100 im Überbrückungsmodus noch mit elektrischer Energie versorgt werden und welche nicht.

### Bezugszeichenliste

10 spannungsgepuffertes Reiheneinbaugerät
11 Gehäuse
12 Lokalbusschnittstelle
13 Eingang der Spannungsversorgung
14a ungepufferter Ausgang der Spannungsversorgung
14b, 14c gepufferter Ausgang der Spannungsversorgung
15 Signalausgang
16 Feldversorgungsanschlüsse
17 Messerkontakte
20 Spannungsversorgungseinheit des spannungsgepufferten Reiheneinbaugerätes
21 Steuerungsmodul der Spannungsversorgungseinheit
22 Energiespeicher
30 Abschalteinrichtung
50 Kopfstation
51 Spannungsversorgungseingang der Kopfstation
52 Signaleingang
53 Lokalbusschnittstelle der Kopfstation
60 weitere Reihenklemmen/Lokalbusteilnehmer
70 externe Energiequelle
80 Feldgeräte
100 Automatisierungssystem

## Patentansprüche

1. Reiheneinbaugerät (10) in Form einer Reihenklemme für Automatisierungssysteme (100), wobei das Reiheneinbaugerät (10) eine von einer Kopfstation (50) verschiedene Reihenklemme ist, aufweisend:
- mindestens eine Lokalbusschnittstelle (12) zum Verbinden des Reiheneinbaugerätes (10) mit einem Lokalbus eines Automatisierungssystems (100), **dadurch gekennzeichnet, dass**
- das Reiheneinbaugerät (10) eine Spannungsversorgungseinheit (20) hat, die mindestens einen Eingang (13) zum Verbinden des Reiheneinbaugerätes (10) mit einer Spannungsquelle (70) und mindestens einen Ausgang (14) aufweist, über den die Spannungsversorgungseinheit (20) mit mindestens einer elektronischen Steuerungseinheit des Automatisierungssystems (100) zur Einspeisung einer Versorgungsspannung verbunden oder verbindbar ist,
- wobei die Spannungsversorgungseinheit (20) des Reiheneinbaugerätes (10) einen Energiespeicher (22) zum Speichern von elektrischer Energie umfasst, oder mit einem solchen verbunden ist,
- wobei die Spannungsversorgungseinheit (20) des Reiheneinbaugerätes (10) eingerichtet ist, einen Spannungsabfall oder einen Spannungsausfall am Eingang (13) der Spannungsversorgungseinheit (20) zu detektieren und mittels der im Energiespeicher (22) gespeicherten elektrischen Energie eine Versorgungsspannung an wenigstens einem der Ausgänge (14b, 14c) der Spannungsversorgungseinheit (20) über einen begrenzten Zeitraum bereitzustellen,
- wobei das Reiheneinbaugerät (10) mindestens einen Signalausgang (15, 12) zum Signalisieren eines am Eingang (13) der Spannungsversorgungseinheit (20) detektierten Spannungsabfalls oder Spannungsausfalls hat.

2. Reiheneinbaugerät (10) nach Anspruch 1, **dadurch gekennzeichnet, dass** das Reiheneinbaugerät (10) eine Abschalteinrichtung (30) hat, die eingerichtet ist, die Spannungsversorgung eines oder mehrerer an dem Lokalbus angeschlossenen Lokalbusteilnehmer (60) zu unterbrechen, wenn die Spannungsversorgungseinheit (20) des Reiheneinbaugerätes (10) einen Spannungsabfall oder einen Spannungsausfall am Eingang (13) der Spannungsversorgungseinheit (20) detektiert.

3. Reiheneinbaugerät (10) nach Anspruch 2, **dadurch gekennzeichnet, dass** die Abschalteinrichtung (30) eingerichtet ist, die Spannungsversorgung der nachgelagerten Lokalbusteilnehmer (60) des Lokalbusses zu unterbrechen.

4. Reiheneinbaugerät (10) nach einem der Ansprüche 2 oder 3, **dadurch gekennzeichnet, dass** die Abschalteinrichtung (30) zum Terminieren des Lokalbusses bei einem detektierten Spannungsabfall oder Spannungsausfall derart ausgebildet ist, so dass die Kommunikation von Prozessdaten über den Lokalbus weiterhin möglich ist.

5. Automatisierungssystem (100) zur Prozessautomation aufweisend
- mindestens eine Kopfstation (50) aufweisend:
- eine elektronische Steuerungseinheit, die zum Ausführen von Steuerungsaufgaben des Automatisierungssystems (100) ausgebildet ist,
- mindestens eine Lokalbusschnittstelle (53) zum Verbinden der Kopfstation (50) mit einem Lokalbus eines Automatisierungssystems (100), und
- eine Spannungsversorgungseinheit, die mindestens einen Eingang (51) zum Verbinden der Kopfstation (50) mit einer Spannungsquelle hat,
- wobei die Kopfstation (50) einen Signaleingang (52, 53) hat, über den der Kopfstation (50) ein detektierter Spannungsabfall oder Spannungsausfall der Versorgungsspannung signalisierbar ist,
- wobei die elektronische Steuerungseinheit der Kopfstation (50) bei einem über den Signaleingang (52, 53) signalisierten Spannungsabfall oder Spannungsausfall eingerichtet ist, ein Notprogramm auszuführen, um die Kopfstation (50) in einen sicheren Zustand zu überführen,
- mindestens ein Reiheneinbaugerät (10) nach einem der Ansprüche 1 bis 4,
- wobei die Kopfstation (50) und das Reiheneinbaugerät (10) über ihre jeweilige Lokalbusschnittstelle (53, 12) an einem gemeinsamen Lokalbus angeschlossen sind,
- wobei der Ausgang (14b) der Spannungsversorgungseinheit (20) des Reiheneinbaugerätes (10) mit dem Eingang (51) der Spannungsversorgungseinheit der Kopfstation (50) verbunden ist,
wobei der mindestens eine Signalausgang (15, 12) zum Signalisieren eines am Eingang (13) der Spannungsversorgungseinheit (20) des Reiheneinbaugerätes (10) detektierten Spannungsabfalls oder Spannungsausfalls mit dem Signaleingang (52, 53) zum Signalisieren eines Spannungsabfalls oder Spannungsausfalls verbunden ist.

6. Automatisierungssystem (190) nach Anspruch 5, **dadurch gekennzeichnet, dass** die Kopfstation (50) eingerichtet ist, nach der Signalisierung eines Spannungsabfalls oder Spannungsausfalls zumindest teilweise Daten von an dem Lokalbus angeschlossenen Lokalbusteilnehmern zu erhalten.

7. Automatisierungssystem (100) nach Anspruch 5, **dadurch gekennzeichnet, dass** ausgehend von der Kopfstation (50) nach dem Reiheneinbaugerät (10) weitere Reihenklemmen (60) vorgesehen sind, die über eine jeweilige Lokalbusschnittstelle (12) mit dem gemeinsamen Lokalbus verbunden sind, wobei das Reiheneinbaugerät (10) eine Abschalteinrichtung (30) hat, die eingerichtet ist, die Spannungsversorgung eines oder mehrerer an dem Lokalbus angeschlossenen Lokalbusteilnehmer (60) zu unterbrechen, wenn die Spannungsversorgungseinheit (20) des Reiheneinbaugerätes (10) einen Spannungsabfall oder einen Spannungsausfall am Eingang (13) der Spannungsversorgungseinheit (20) detektiert, wobei das Reiheneinbaugerät (10) eingerichtet ist, mittels seiner Abschalteinrichtung (30) eines oder mehrerer an dem Lokalbus angeschlossenen Lokalbusteilnehmer zu unterbrechen, wenn die Spannungsversorgungseinheit des Reiheneinbaugerätes (10) einen Spannungsabfall oder einen Spannungsausfall am Eingang der Spannungsversorgungseinheit (13) detektiert.

8. Automatisierungssystem (100) nach Anspruch 7, **dadurch gekennzeichnet, dass** das Reiheneinbaugerät (10) mittels der Abschalteinrichtung (30) eingerichtet ist, die Spannungsversorgung aller nachgelagerten Lokalbusteilnehmer (60) des Lokalbusses zu unterbrechen.

9. Verfahren zur Prozessautomation mittels eines Automatisierungssystems (100), wobei das Automatisierungssystem (100) eine Kopfstation (50), ein spannungsgepuffertes Reiheneinbaugerät (10) in Form einer Reihenklemme, wobei das Reiheneinbaugerät (10) eine von einer Kopfstation (50) verschiedene Reihenklemme ist, und ein oder mehrere weitere Reiheneinbaugeräte (60) hat, die mittels eines gemeinsamen Lokalbusses miteinander verbunden sind, wobei das Verfahren die folgenden Schritte umfasst:
- Detektieren eines Spannungsabfalls oder Spannungsausfalls an einem Eingang (13) einer Spannungsversorgungseinheit (20) des spannungsgepufferten Reiheneinbaugerätes (10), mit dem das Reiheneinbaugerät (10) mit einer Spannungsquelle (70) verbunden ist;
- Bereitstellen einer elektrischen Versorgungsspannung an einem Ausgang (14b) der Spannungsversorgungseinheit (20) des spannungsgepufferten Reiheneinbaugerätes (10) aus einem elektrischen Energiespeicher (22), wobei der Ausgang (14b) der Spannungsversorgungseinheit des spannungsgepufferten Reiheneinbaugerätes mit einem Eingang (51) einer Spannungsversorgungseinheit der Kopfstation (50) verbunden ist;
- Signalisieren des detektierten Spannungsabfalls oder Spannungsausfalls an mindestens einem Signalausgang (15, 12) des spannungsgepufferten Reiheneinbaugerätes, wobei der Signalausgang (15, 12) des spannungsgepufferten Reiheneinbaugerätes (10) mit einem Signaleingang (52, 53) der Kopfstation (50) verbunden ist; und
- Ausführen eines Notprogramms durch eine elektronische Steuerungseinheit der Kopfstation (50), wenn ein detektierter Spannungsabfall oder Spannungsausfall am Signaleingang (52) der Kopfstation (50) durch das spannungsgepufferte Reiheneinbaugerät (10) signalisiert wurde, während die Kopfstation (50) über den Eingang der Spannungsversorgungseinheit (13) der Kopfstation (50) mit der bereitgestellten elektrischen Versorgungsspannung gespeist wird.

10. Verfahren nach Anspruch 9, **dadurch gekennzeichnet, dass** nach dem Detektieren eines Spannungsabfalls oder Spannungsausfalls mittels einer Abschalteinrichtung (30) des spannungsgepufferten Reiheneinbaugerätes (10) die Spannungsversorgung eines oder mehrerer an dem Lokalbus angeschlossenen Lokalbusteilnehmer unterbrochen wird.

11. Verfahren nach Anspruch 10, **dadurch gekennzeichnet, dass** die Spannungsversorgung nachgelagerter Lokalbusteilnehmer (60) des Lokalbusses unterbrochen wird.

12. Verfahren nach Anspruch 10 oder 11, **dadurch gekennzeichnet, dass** nach dem Detektieren eines Spannungsabfalls oder Spannungsausfalls mittels einer Abschalteinrichtung (30) des spannungsgepufferten Reiheneinbaugerätes (10) der Lokalbus terminiert wird, so dass die Kommunikation von Prozessdaten über den Lokalbus weiterhin möglich ist.

13. Verfahren nach einem der Ansprüche 9 bis 12, **dadurch gekennzeichnet, dass** nach dem Signalisieren eines detektierten Spannungsabfalls oder Spannungsausfalls am Signaleingang (52, 53) der Kopfstation (50) zumindest teilweise Daten von an dem Lokalbus angeschlossenen und verbundenen Lokalbusteilnehmern an die Kopfstation (50) übertragen werden.

## Claims

1. Rail-mounted device (10) in the form of a terminal block for automation systems (100), the rail-mounted device (10) being a terminal block other than a head station (50):
- at least one local bus interface (12) for connecting the rail-mounted device (10) to a local bus of an automation system (100), **characterized in that**
- the rail-mounted device (10) has a voltage supply unit (20) which has at least one input (13) for connecting the rail-mounted device (10) to a voltage source (70) and at least one output (14) via which the voltage supply unit (20) is connected or can be connected to at least one electronic control unit of the automation system (100) for feeding in a supply voltage,
- wherein the voltage supply unit (20) of the rail-mounted device (10) comprises or is connected to an energy storage device (22) for storing electrical energy,
- wherein the voltage supply unit (20) of the rail-mounted device (10) is set up to detect a voltage drop or a voltage failure at the input (13) of the voltage supply unit (20) and to provide a supply voltage to at least one of the outputs (14b, 14c) of the voltage supply unit (20) over a limited period of time by means of the electrical energy stored in the energy storage device (22),
- wherein the rail-mounted device (10) has at least one signal output (15, 12) for signaling a voltage drop or voltage failure detected at the input (13) of the voltage supply unit (20).

2. Rail-mounted device (10) according to claim 1, **characterized in that** the rail-mounted device (10) has a switch-off device (30) which is set up to interrupt the voltage supply to one or more local bus subscribers (60) connected to the local bus if the voltage supply unit (20) of the rail-mounted device (10) detects a voltage drop or a voltage failure at the input (13) of the voltage supply unit (20).

3. Series installation device (10) according to claim 2, **characterized in that** the switch-off device (30) is set up to interrupt the voltage supply to the downstream local bus subscribers (60) of the local bus.

4. Series installation device (10) according to one of claims 2 or 3, **characterized in that** the switch-off device (30) for terminating the local bus in the event of a detected voltage drop or voltage failure is designed in such a way that communication of process data via the local bus is still possible.

5. Automation system (100) for process automation comprising
- having at least one head station (50):
- an electronic control unit which is designed to execute control tasks of the automation system (100),
- at least one local bus interface (53) for connecting the head station (50) to a local bus of an automation system (100), and
- a voltage supply unit which has at least one input (51) for connecting the head station (50) to a voltage source,
- wherein the head station (50) has a signal input (52, 53) via which a detected voltage drop or voltage failure of the supply voltage can be signaled to the head- station (50),
- wherein the electronic control unit of the head station (50) is set up to execute an emergency program in the event of a voltage drop or voltage failure signaled via the signal input (52, 53) in order to transfer the head station (50) to a safe state,
- at least one rail-mounted device (10) according to one of claims 1 to 4,
- wherein the head station (50) and the rail-mounted device (10) are connected to a common local bus via their respective local bus interface (53, 12),
- wherein the output (14b) of the voltage supply unit (20) of the rail-mounted device (10) is connected to the input (51) of the voltage supply unit of the head station (50),
wherein the at least one signal output (15, 12) for signaling a voltage drop or voltage failure detected at the input (13) of the voltage supply unit (20) of the series installation device (10) is connected to the signal input (52, 53) for signaling a voltage drop or voltage failure.

6. Automation system (190) according to claim 5, **characterized in that** the head station (50) is set up to receive at least partial data from local bus subscribers connected to the local bus after a voltage drop or voltage failure has been signalled.

7. Automation system (100) according to claim 5, **characterized in that**, starting from the head station (50), further terminal blocks (60) are provided downstream of the rail-mounted device (10), which are connected to the common local bus via a respective local bus interface (12), the rail-mounted device (10) having a switch-off device (30) which is set up to interrupt the voltage supply to one or more local bus subscribers (60) connected to the local bus, when the voltage supply unit (20) of the rail-mounted device (10) detects a voltage drop or a voltage failure at the input (13) of the voltage supply unit (20), the rail-mounted device (10) being set up to interrupt, by means of its switch-off device (30), one or more local bus subscribers connected to the local bus when the voltage supply unit of the rail-mounted device (10) detects a voltage drop or a voltage failure at the input of the voltage supply unit (13).

8. Automation system (100) according to claim 7, **characterized in that** the rail-mounted device (10) is set up by means of the switch-off device (30) to interrupt the power supply to all downstream local bus subscribers (60) of the local bus.

9. Method for process automation by means of an automation system (100), the automation system (100) having a head station (50), a voltage-buffered rail-mounted device (10) in the form of a terminal block, the rail-mounted device (10) being a terminal block different from a head station (50), and one or more further rail-mounted devices (60) which are connected to one another by means of a common local bus, the method comprising the following steps:
- Detection of a voltage drop or voltage failure at an input (13) of a voltage supply unit (20) of the voltage-buffered rail-mounted device (10), to which the rail-mounted device (10) is connected to a voltage source (70);
- Provision of an electrical supply voltage at an output (14b) of the voltage supply unit (20) of the voltage-buffered rail-mounted device (10) from an electrical energy storage device (22), the output (14b) of the voltage supply unit of the voltage-buffered rail-mounted device being connected to an input (51) of a voltage supply unit of the head station (50);
- signaling the detected voltage drop or voltage failure at at least one signal output (15, 12) of the voltage-buffered rail-mounted device, the signal output (15, 12) of the voltage-buffered rail-mounted device (10) being connected to a signal input (52, 53) of the head station (50); and
- execution of an emergency program by an electronic control unit of the head station (50) if a detected voltage drop or voltage failure at the signal input (52) of the head station (50) has been signaled by the voltage-buffered rail-mounted device (10), while the head station (50) is supplied with the provided electrical supply voltage via the input of the voltage supply unit (13) of the head station (50).

10. Method according to claim 9, **characterized in that** after the detection of a voltage drop or voltage failure by means of a switch-off device (30) of the voltage-buffered rail-mounted device (10), the voltage supply of one or more local bus subscribers connected to the local bus is interrupted.

11. Method according to claim 10, **characterized in that** the power supply to downstream local bus subscribers (60) of the local bus is interrupted.

12. Method according to claim 10 or 11, **characterized in that** after the detection of a voltage drop or voltage failure by means of a switch-off device (30) of the voltage-buffered rail-mounted device (10), the local bus is terminated, so that the communication of process data via the local bus is still possible.

13. Method according to one of claims 9 to 12, **characterized in that** after signalling a detected voltage drop or voltage failure at the signal input (52, 53) of the head station (50), data from local bus subscribers connected and connected to the local bus are at least partially transmitted to the head station (50).

## Revendications

1. Dispositif de montage en série (10) sous la forme d'une barrette à bornes pour des systèmes d'automatisation (100), le dispositif de montage en série (10) étant une barrette à bornes différente d'une station de tête (50), comprenant :
- au moins une interface de bus local (12) pour connecter le dispositif de montage en série (10) à un bus local d'un système d'automatisation (100), **caractérisé en ce que**
- le dispositif de montage en série (10) comprend une unité d'alimentation en tension (20) qui présente au moins une entrée (13), destinée à connecter le dispositif de montage en série (10) à une source de tension (70), et au moins une sortie (14) par laquelle l'unité d'alimentation en tension (20) est ou peut être connectée à au moins une unité de commande électronique du système d'automatisation (100) pour l'alimentation d'une tension d'alimentation,
sachant que
- l'unité d'alimentation en tension (20) du dispositif de montage en série (10) comprend un accumulateur d'énergie (22) destiné à stocker de l'énergie électrique, ou est connectée à un tel accumulateur,
- l'unité d'alimentation en tension (20) du dispositif de montage en série (10) est conçue pour détecter une chute de tension ou une panne de tension à l'entrée (13) de l'unité d'alimentation en tension (20) et pour fournir, au moyen de l'énergie électrique stockée dans l'accumulateur d'énergie (22), une tension d'alimentation à au moins l'une des sorties (14b, 14c) de l'unité d'alimentation en tension (20) pendant une durée limitée,
- le dispositif de montage en série (10) présente au moins une sortie de signal (15, 12) pour signaler une chute de tension ou une panne de tension détectée à l'entrée (13) de l'unité d'alimentation en tension (20).

2. Dispositif de montage en série (10) selon la revendication 1,
**caractérisé en ce que** le dispositif de montage en série (10) comprend un dispositif de coupure (30) conçu pour interrompre l'alimentation en tension d'un ou plusieurs participants au bus local (60), raccordés au bus local, lorsque l'unité d'alimentation en tension (20) du dispositif de montage en série (10) détecte une chute de tension ou une panne de tension à l'entrée (13) de l'unité d'alimentation en tension (20).

3. Dispositif de montage en série (10) selon la revendication 2,
**caractérisé en ce que** le dispositif de coupure (30) est conçu pour interrompre l'alimentation en tension des participants au bus local (60) situés en aval.

4. Dispositif de montage en série (10) selon l'une des revendications 2 ou 3, **caractérisé en ce que** le dispositif de coupure (30) est conçu pour, en cas de détection d'une chute de tension ou d'une panne de tension, reprogrammer le bus local de telle sorte que la communication de données de processus via le bus local reste possible.

5. Système d'automatisation (100) pour l'automatisation de processus, comprenant
- au moins une station de tête (50) comprenant :
- une unité de commande électronique conçue pour exécuter des tâches de commande du système d'automatisation (100),
- au moins une interface de bus local (53) pour connecter la station de tête (50) à un bus local d'un système d'automatisation (100), et
- une unité d'alimentation en tension présentant au moins une entrée (51) pour connecter la station de tête (50) à une source de tension,
dans lequel
- la station de tête (50) présente une entrée de signal (52, 53) permettant de signaler à la station de tête (50) une chute de tension ou panne de tension détectée de la tension d'alimentation,
- l'unité de commande électronique de la station de tête (50) est conçue pour, en cas de chute de tension ou de panne de tension signalée par l'entrée de signal (52, 53), exécuter un programme d'urgence afin de faire passer la station de tête (50) dans un état sécurisé,
- au moins un dispositif de montage en série (10) selon l'une des revendications 1 à 4,
- la station de tête (50) et le dispositif de montage en série (10) sont connectés à un bus local commun via leur interface de bus local respective (53, 12),
- la sortie (14b) de l'unité d'alimentation en tension (20) du dispositif de montage en série (10) est connectée à l'entrée (51) de l'unité d'alimentation en tension de la station de tête (50),
- ladite au moins une sortie de signal (15, 12), destinée à signaler une chute de tension ou une panne de tension détectée à l'entrée (13) de l'unité d'alimentation en tension (20) du dispositif de montage en série (10), est connectée à l'entrée de signal (52, 53), destinée à signaler une chute de tension ou une panne de tension.

6. Système d'automatisation (100) selon la revendication 5,
**caractérisé en ce que** la station de tête (50) est conçue pour recevoir, après la signalisation d'une chute de tension ou d'une panne de tension, au moins partiellement des données des participants au bus local raccordés au bus local.

7. Système d'automatisation (100) selon la revendication 5,
**caractérisé en ce qu'**il est prévu, à partir de la station de tête (50), en aval du dispositif de montage en série (10), d'autres barrettes à bornes (60) qui sont connectées au bus local commun par l'intermédiaire d'une interface de bus local (12) respective, le dispositif de montage en série (10) comprenant un dispositif de coupure (30) conçu pour interrompre l'alimentation en tension d'un ou de plusieurs participants au bus local (60) raccordés au bus local lorsque l'unité d'alimentation en tension (20) du dispositif de montage en série (10) détecte une chute de tension ou une panne de tension à l'entrée (13) de l'unité d'alimentation en tension (20), le dispositif de montage en série (10) étant conçu pour interrompre, au moyen de son dispositif de coupure (30), un ou plusieurs participants au bus local raccordés au bus local, lorsque l'unité d'alimentation en tension du dispositif de montage en série (10) détecte une chute de tension ou une panne de tension à l'entrée (13) de l'unité d'alimentation en tension.

8. Système d'automatisation (100) selon la revendication 7,
**caractérisé en ce que** le dispositif de montage en série (10) est conçu pour, au moyen du dispositif de coupure (30), interrompre l'alimentation en tension de tous les participants au bus local (60) situés en aval.

9. Procédé d'automatisation de processus au moyen d'un système d'automatisation (100), le système d'automatisation (100) comprenant une station de tête (50), un dispositif de montage en série à tampon de tension (10) sous la forme d'une barrette à bornes, le dispositif de montage en série (10) étant une barrette à bornes différente d'une station de tête (50), et un ou plusieurs autres dispositifs de montage en série (60) qui sont interconnectés au moyen d'un bus local commun, le procédé comprenant les étapes suivantes consistant à :
- détecter une chute de tension ou une panne de tension à une entrée (13) d'une unité d'alimentation en tension (20) du dispositif de montage en série à tampon de tension (10), par laquelle le dispositif de montage en série (10) est connecté à une source de tension (70) ;
- fournir une tension d'alimentation électrique à une sortie (14b) de l'unité d'alimentation en tension (20) du dispositif de montage en série à tampon de tension (10) à partir d'un accumulateur d'énergie électrique (22), la sortie (14b) de l'unité d'alimentation en tension du dispositif de montage en série à tampon de tension étant connectée à une entrée (51) d'une unité d'alimentation en tension de la station de tête (50) ;
- signaler la chute de tension ou la panne de tension détectée à au moins une sortie de signal (15, 12) du dispositif de montage en série à tampon de tension, la sortie de signal (15, 12) du dispositif de montage en série à tampon de tension (10) étant connectée à une entrée de signal (52, 53) de la station de tête (50) ; et
- exécuter un programme d'urgence par une unité de commande électronique de la station de tête (50) lorsqu'une chute de tension ou une panne de tension détectée à l'entrée de signal (52) de la station de tête (50) a été signalée par le dispositif de montage en série à tampon de tension (10), alors que la station de tête (50) est alimentée en la tension d'alimentation électrique fournie via l'entrée de l'unité d'alimentation en tension (13) de la station de tête (50).

10. Procédé selon la revendication 9,
**caractérisé en ce qu'**après la détection d'une chute de tension ou d'une panne de tension, l'alimentation en tension d'un ou de plusieurs participants au bus local raccordés au bus local est interrompue au moyen d'un dispositif de coupure (30) de l'unité de montage en série à tampon de tension (10).

11. Procédé selon la revendication 10,
**caractérisé en ce que** l'alimentation en tension de participants au bus local (60) situés en aval est interrompue.

12. Procédé selon la revendication 10 ou 11,
**caractérisé en ce qu'**après la détection d'une chute de tension ou d'une panne de tension, le bus local est reprogrammé au moyen d'un dispositif de coupure (30) du dispositif de montage en série (10) à tampon de tension tampon, de sorte que la communication de données de processus reste possible via le bus local.

13. Procédé selon l'une des revendications 9 à 12,
**caractérisé en ce que**, après la signalisation d'une chute de tension ou d'une panne de tension détectée à l'entrée de signal (52, 53) de la station de tête (50), des données sont transmises au moins partiellement à la station de tête (50) par des participants au bus local raccordés au bus local et connectés.
